# EUROPÄISCHE PATENTSCHRIFT

(11) **EP 0 519 915 B1**
(45) Veröffentlichungstag und Bekanntmachung des Hinweises auf die Patenterteilung: **11.01.1995**
(21) Anmeldenummer: 90904265.7
(22) Anmeldetag: 13.03.1990
(51) Int. Cl.: A61B 5/103, A61C 19/04, G01B 11/24

(54) **VERFAHREN ZUR AUSMESSUNG EINES RAUMES, INSBESONDERE EINES MUNDINNENRAUMS SOWIE VORRICHTUNG ZUR DURCHFÜHRUNG EINES SOLCHEN VERFAHRENS**
PROCESS AND DEVICE FOR MEASURING THE DIMENSIONS OF A SPACE, IN PARTICULAR A BUCCAL CAVITY
PROCEDE ET DISPOSITIF DE MESURE D'UN ESPACE, NOTAMMENT DE L'INTERIEUR DE LA BOUCHE

(43) Veröffentlichungstag der Anmeldung: 30.12.1992
(73) Patentinhaber: COMDENT GMBH, D-12107 Berlin (DE)
(72) Erfinder: WENZ, Heinz, V., D-6450 Hanau 7 (DE)
(74) Vertreter: Keil, Rainer A., Dipl.-Phys. Dr.
(86) Internationale Anmeldenummer: EP9000404
(87) Internationale Veröffentlichungsnummer: WO9113586

(56) Entgegenhaltungen:
- EP-A- 0 091 876
- EP-A- 0 278 882
- WO-A-84/03143
- DE-A- 3 810 455
- DE-A- 3 817 561
- US-A- 4 070 683
- US-A- 4 525 858

## Beschreibung

Die Erfindung bezieht sich auf ein Verfahren zur Ausmessung eines Raumes nach dem Oberbegriff des Anspruchs 1 sowie auf eine Vorrichtung zur Durchführung eines solchen Verfahrens.

Verfahren zur Ausmessung von Ober- und Unterkiefergebiß und Vorrichtungen zu deren Durchführung sind bspw. in Form der zahnärztlichen Verwendung von mechanischen Abdrucklöffels bekannt. Dabei wird zunächst ein den anatomischen Verhältnissen des Mundinnenraums des jeweiligen Patienten entsprechendes Paar Abdrucklöffel (Oberkieferabdrucklöffel, Unterkieferabdrucklöffel) ausgewählt und durch Einsetzen in den Mundinnenraum hinsichtlich Größe und Paßgenauigkeit kontrolliert. Nach der Auswahl und überprüfung eines geeigneten Paares von Abdrucklöffeln werden beide Abdrucklöffel mit einer pastenartigen Abdruckmasse gefüllt und anschließend in den Mundinnenraum des Patienten derart eingesetzt, daß die Abdruckmasse des einen Abdrucklöffels das Oberkiefergebiß, die Abdruckmasse des anderen Abdrucklöffels das Unterkiefergebiß möglichst gleichmäßig umgibt. Die Abdruckmasse verfestigt sich nun innerhalb weniger Minuten und wird zusammen mit dem jeweiligen Abdrucklöffel in noch elastischem Zustand von dem Ober- bzw. Unterkiefergebiß gelöst und aus dem Mund desPatienten herausgenommen. Nach dem endgültigen Aushärten der Abdruckmasse wird diese in eine geeignete äußere Form eingesetzt und die Form anschließend mit Gips oder einer gipsartigen masse gefüllt. Sobald der Gips oder die gipsartige Masse ausgehärtet ist, wird die Abdruckmasse entfernt. Auf diese Weise erhält man einen geometrisch-topographischen Abdruck der Gestalt des Mundinnenraums, insbesondere im Bereich der Gebißpartien, welcher bspw. zu kieferorthopädischen Zwecken oder bei der Herstellung von Zahnprothesen od. dgl. benötigt wird. Nachteilig ist bei dem bekannten Verfahren und der bekannten Vorrichtung die umständliche und zeitaufwendige Herstellung eines Abdrucks, die fehlende Beziehung zwischen dem Ober- und Unterkieferabdruck, das Fehlen einer Messung der Kiefergelenkbewegung, die Ungenauigkeit des Verfahrens durch die vielen Fehlermöglichkeiten sowie die schwierige Auswertung der gewonnenen Ergebnisse.

Aus der EP-A-0 091 876 ist eine Vorrichtung bekannt, mit der durch optische Einrichtungen ein Abdruck eines Gebisses für die Herstellung von Prothesen erzeugt werden kann. Dazu wird von einer Strahlungsquelle kohärentes Licht in Form eines Laserstrahls über eine als Lichtleiter dienende optische Faser, die an ihrem Ende eine Linse aufweist, auf einen zu analysierenden Bereich eines Zahnstumpfes gelenkt. Das von dem Zahnstumpf reflektierte Licht wird über die Linse und den Lichtleiter einer Meßzelle zugeführt. Um die erhaltenen Lichtsignale auswerten zu können, ist es notwendig, die Entfernung der Analyseebene auf dem Zahnstumpf von einer Referenzebene zu erfassen. Zu diesem Zweck ist auf einem Analysekopf der optischen Faser ein Stab mit einer geeigneten Länge vorgesehen, der bei der Analyse auf den Zahnstumpf aufgesetzt wird, so daß ein festgelegter Abstand zwischen dem Zahnstumpf und dem Analysekopf vorgegeben ist. Der Stab kann sich an dem Zahnstumpf selbst, dem Gaumen oder anderen geeigneten Flächen des Gebisses abstützen, solange gewährleistet ist, daß ein festgelegter Abstand zwischen der Analyseebene und der Referenzebene besteht. Durch das punktuelle Ansetzen des Stabes ist es mit der bekannten Vorrichtung aber nur möglich, einen kleinen Teilbereich, bspw. eine Seitenfläche des Zahnstumpfes zu analysieren. Auch die als Lichtleiter dienende optische Faser erlaubt lediglich die Analyse eingegrenzter Bereiche. Selbst durch die vorgeschlagene Anordnung von Spiegeln lassen sich allenfalls zwei Seiten des zu analysierenden Objekts erfassen. Keinesfalls ist es jedoch mit einer solchen Vorrichtung möglich, den gesamten Raumbereich des Objekts, geschweige denn die gesamte Kiefersituation mit Ober- und Unterkiefer zusammenhängend zu erfassen. Vielmehr muß diese mit einer Vielzahl von Einzelaufnahmen erfaßt werden, die anschließend in aufwendiger Weise zueinander in Beziehung gesetzt werden müssen.

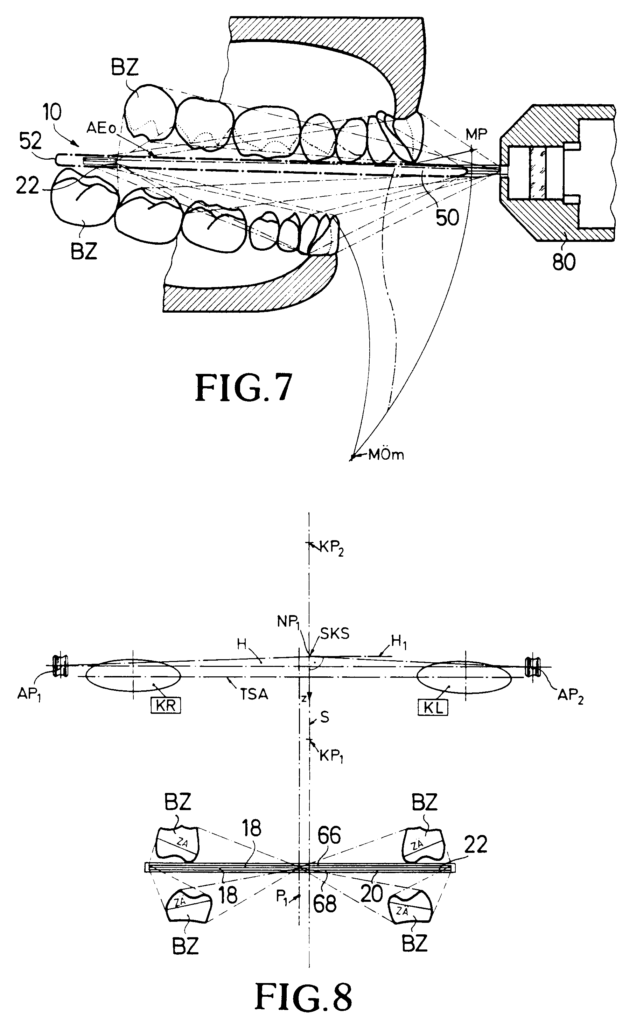

Die DE-A-38 10 455 beschreibt ein Verfahren und eine Vorrichtung zur berührungsfreien räumlichen Erfassung eines unregelmäßigen Körpers, insbesondere eines Zahns oder einer Zahnreihe. Die Erfassung sämtlicher Oberflächenbereiche des Körpers soll mittels getrennter, jeder Teiloberfläche einzeln zugeordneter spaltförmiger Lichtstrahlen und Lichtempfänger ermöglicht werden. Hierzu sind vier Aufnahmeeinheiten erforderlich, welche den zu untersuchenden Körper von allen Seiten bestrahlen. Zur Signalentkopplung der vier Aufnahmeeinheiten werden für die von den jeweiligen Lichtquellen ausgesandten Lichtstrahlen unterschiedliche Wellenlängen verwendet. Die Koordinatenwerte der einzelnen Teiloberflächen werden im Anschluß daran mittels einer Auswerteeinheit zur gesamten Oberfläche des Körpers zusammengefaßt. Die Aufteilung der Signaleinrichtung in vier Aufnahmeinheiten vervielfältigt den Fertigungsaufwand und erhöht die Fehleranfälligkeit der Abtastvorrichtung. Auch müssen die Koordinatenwerte der einzelnen Teiloberflächen in einer Auswerteeinheit zusammengefaßt und zueinander in Beziehung gesetzt werden, was einen hohen Anspruch an die anschließende Datenverarbeitung stellt. Nachteilig ist auch die getrennte Erfassung der einzelnen Zahnreihen. Ober- und Unterkiefergebiß müssen einzeln erfaßt und die Ergebnisse mit Hilfe der durch eine zusätzliche Bildaufnahmevorrichtung ermittelten Relativbewegung beider Zahnreihen einander zugeordnet werden. Auch wird die Genauigkeit der Abbildung durch die zur Bündelung des Lichtstrahls als Spalt auf der Oberfläche verwendete Fokussiereinheit beeinträchtigt, da die Schärfentiefe einer solchen Fokussierung nur begrenzt ist. Die Oberfläche des abzubildenden Volumeninneren liegt jedoch meist außerhalb des Schärfezentrums, so daß die für die Rekonstruktionen benötigte Genauigkeit der Abbildungen nicht erreicht werden kann. Auch fällt bei Betrachtung der Zeichnung (Fig. 7) auf, daß mit der bekannten Erfassungseinrichtung nicht alle Zähne vermessen werden können. Bei dem notwendigen Abstand zwischen den einzelnen Spiegeln ist es aufgrund der anatomischen Verhältnisse der Mundhöhle bspw. nicht möglich, den jeweils letzten Backenzahn (Molar 3) zu vermessen.

Die US-A-3 382 781 beschreibt eine Kamera, deren Aufnahmeeinheit in die Mundhöhle eines Patienten eingeführt wird, und mit der eine Fotographie des Oberkiefers bzw. bei umgekehrter Einführung der Aufnahmeeinheit der Kamera in die Mundhöhle eine Aufnahme des Unterkiefers gemacht werden kann. Eine gleichzeitige Erfassung der gesamten Kiefersituation ist nicht möglich, da auf jeden Fall mindestens zwei getrennte Fotographien angefertigt werden müssen. Vor Herstellung eines Ersatzgebisses oder aufeinander abgestimmter Prothesen im Ober- und Unterkiefergebiß ist es erforderlich, die jeweils nur zweidimensional vorliegenden Daten der beiden Fotographien zueinander in Beziehung zu setzten, was einen erheblichen Aufwand erfordern würde, wenn die Herstellung eines Ersatzgebisses ohne die notwendigen dreidimensionalen Informationen überhaupt möglich ist.

Die EP-A-0 278 882 beschreibt ein Verfahren zur Abtastung und dreidimensionalen Darstellung eines Objektes, insbesondere für die Herstellung von Zahnprothesen, das auf der Projektion eines sinusoidalen Gitters auf das Projekt beruht, wobei die Projektion in kürzester Zeit zweimal mit einer Phasenverschiebung wiederholt werden muß, um aus den resultierenden Intensitätsschwankungen die dritte Dimension des Objekts festlegen zu können. Bei diesem Verfahren werden zusätzlich mehrere Projektionen hintereinander benötigt, um das Objekt panoramamäßig zu erfassen, so daß der Patient durch die lange Aufnahmedauer belastet wird.

Aus der WO-A-84 03 143 ist ein Meßinstrument bekannt, das mit Hilfe mechanischer Tastung und Ablesung von Leuchtpunkten die Tiefenbestimmung von Taschen bzw. Kavitäten ermöglicht. Die räumliche Erfassung eines Körpers ist mit einem solchen Gerät jedoch nicht möglich.

Aufgabe der Erfindung ist es daher, ein Verfahren der eingangs genannten Art dahingehend zu verbessern, daß bei einfacher Handhabung und mit geringem Zeitaufwand möglichst fehlerfreie Meßwerte des gesamten zu vermessenden Volumeninneren, insbesondere bezüglich der Gestalt eines Ober- und Unterkiefergebisses, gewonnen werden können. Ferner soll mit der Erfindung eine Abtastvorrichtung vorgeschlagen werden, mit welcher dieses Verfahren mit einfachen technischen Mitteln ausgeführt werden kann.

Diese Aufgabe wird mit der Erfindung im wesentlichen durch die kennzeichnenden Merkmale des Anspruchs 1 gelöst.

Durch die gleichzeitige Abtastung des gesamten zu vermessenden Mundinnenraums, d.h. gleichzeitig Ober- und Unterkiefergebiß, mittels einer einzigen Aufnahmeeinheit läßt sich der gesamte Raumbereich und damit die gesamte Kiefersituation zusammenhängend erfassen, so daß die Handhabung erheblich vereinfacht und beschleunigt wird. Außerdem wird die Fehleranfälligkeit reduziert und wegen der nicht mehr notwendigen zusätzlichen Zuornung der Daten die elektronische Auswertung stark vereinfacht.

Eine besonders hohe Genauigkeit läßt sich durch die Verwendung eines feinen Musters, bspw. eines mittels Interferenz erzeugten Streifenmusters, erzielen.

Bei einer Weiterbildung der Erfindung wird die reflektierte Strahlung mit einer stereo-photogrammetrisch oder nach dem Triangulationsprinzip oder nach dem Prinzip eines Hologramms arbeitenden Aufnahmeeinrichtung aufgenommen, wodurch sich sehr genaue dreidimensionale geometrisch topographische Messungen durchführen lassen.

Die Aussagekraft der Messungen läßt sich noch einmal deutlich erhöhen, wenn, wie bei einer besonderen Ausgestaltung der Erfindung, die projizierte und/oder reflektierte Strahlung infolge einer Relativbewegung der Projektionseinrichtung und/oder der Aufnahmeeinrichtung insbesondere in Längsrichtung gegenüber dem Mundinnenraum zeilenweise auf die Oberflächen des zu vermessenden Mundinnenraumes projiziert und/oder von den Oberflachen des Mundinnenraums aufgenommen wird. Durch Erzeugung von Zwischenbildern des sich bewegenden UK-Gisses können genaue Rückschlüsse auf, die Kiefergelenkbewegung gezogen werden.

Bei einer weiteren besonders vorteilhaften Ausgestaltung der Erfindung werden die optischen Signale, statt auf einen Zeilensensor ggf. mittels einer Faltungsoptik, auf einen Flächensensor abgebildet, wo sie in leichter verarbeitbare elektronische Signale umgewandelt werden.

Die elektronischen Signale können zu Bilder verarbeitet und auf einem Bildschirm sichtbar gemacht werden, wodurch die Auswertung der gewonnenen Daten unterstützt wird.

Darüber, hinaus können die verarbeiteten elektronischen Signale auch direkt einem computergesteuerten Fertigungssystem zur Herstellung von Zahnersatzteilen zugeführt werden, so daß eine vollautomatische Fertigung möglich wird.

Bei einer Weiterbildung der Erfindung ist vorgesehen, daß die optische Vermessungseinrichtung durch Erhöhung der Energiezufuhr zur unmittelbaren Bearbeitung des Mundinnenraumes eingesetzt wird, wobei in erster Linie an den Einsatz eines Lasers, insbesondere eines YAG-Argon-Lasers mit geringer Tiefenwirkung zur kryochirurgischen Bearbeitung, bzw. eines Argon-Fluorid-Excrimer-Lasers zur Bearbeitung von Keramik oder Hartsubstanz der Zähne ohne thermische Nebenwirkung mittels Photoablation, gedacht ist.

Die Erfindung bezieht sich auch auf eine Abtastvorrichtung zur Durchführung des zuvor erläuterten Verfahrens, welche sich durch die Merkmale des Anspruchs 9 auszeichnet.

Bei einer Weiterbildung der erfindungsgemäßen Vorrichtung projiziert die Projektionseinrichtung ein definiertes optisches Strahlenmuster auf die Oberflächen und/oder das transluzente Volumeninnere des Mundinnenraums, insbesondere der transluzenten Zähne, welches die Grundlage für die geometrisch/topographische Erfassung des Mundinnenraums mittels Triangulation bildet.

Um eine besonders einfache Auswertung der projizierten Strahlung zu gewährleisten, ist bei einer anderen vorteilhaften Ausgestaltung vorgesehen, daß das von der Projektionseinrichtung erzeugte optische Muster ein Streifenmuster ist.

Ein genau definiertes Streifenmuster läßt sich, wie bei einer weiteren vorteilhaften Ausgestaltung der Erfindung vorgesehen, mit einem Interferometer erzeugen. Besonders geeignet ist bspw. ein Michelson-Interferomater. Zur besonders feinen und exakten Einstellung des Streifenabstandes können die Spiegel des Interferometers mittels einer piezoelektrischen Einrichtung verstellt werden.

Bei einer anderen Ausgestaltung der Erfindung ist vorgesehen, daß die Projektionseinrichtung eine Lichtquelle aufweist, die vorzugsweise ein dem Sonnenlicht ähnliches Licht ausstrahlt, wodurch auch die Farbe der Zähne bestimmt werden kann. Da die Zähne transluzent sind und das Licht verschiedener Wellenlängen unterschiedlich tief in die Zähne eindringt und von dort unterschiedlich stark reflektiert wird, ist zu einer exakter Farberkennung, d.h. zur genauen Erfassung der Pigmentanordnung in dreidemensionalen transluzenten Raum, eine solche dreidimensionale Messung der Koordinaten der Farborte unabdingbar. Zur Durchführung eines Fluoreszenz-Tests kann auch UV-Licht mit einer Wellenlänge von 300 nm eingesetzt werden, während ein Metamerie-Test am besten mit Wolframlicht (1500 lux, gedämpft) erfolgt.

Besonders geeignet als Strahlungsquelle ist ein Laser, der entweder monochromatisches Licht einer bestimmten Wellenlänge ausstahlt, wie bspw. ein Helium-Neon-Laser, oder durchstimmbar, d.h. auf verschiedene Wellenlängen einstellbar, ausgelegt ist, wie z.B. ein Alexandrit-Laser, wobei das ausgestrahlte Licht vorzugsweise polarisiert ist, d.h. lediglich in einer einzigen Schwingungsebene schwingt, um ein scharfes gut auswertbares Streifenmuster zu erzeugen. Neben dem Laser kann selbstverständlich noch eine zusätzliche Lichtquelle vorgesehen sein, die ebenso der Farbbestimmung der Zähne dient. Statt des Lasers mit kohärentem Licht kann auch ein Monochromator vorgesehen sein. Ein Laser kann auch zur Erzeugung eines Hologramms eingesetzt werden.

Um eine gleichmäßige Ausleuchtung des Mundinnenraums zu erzielen, ist bei einer anderen Ausgestaltung der Erfindung vorgesehen, daß die Projektionseinrichtung eine Beleuchtungsoptik aufweist. Eine gleichtmäßige Ausleuchtung des Mundinnenraums ist für eine hohe Auflösung vorteilhaft. Der Beleuchtungsoptik kann auch ein Polarisator, vorzugsweise ein Zirkularpolarisator mit elektronischer Einstellung, zugeordnet sein, da für bestimmte Anwendungsfälle, wie z.B. optische Kräftemessungen, polarisiertes Licht benötigt wird.

Bei einer weiteren vorteilhaften Ausgestaltung der Erfindung wird die gleichmäßige Ausleuchtung von Ober- und Unterkiefergebiß durch eine Umlenkeinrichtung erzielt, welche die Projektionsstrahlung im Mundinnenraum entsprechend umlenken kann; um z.B. die vorderen und rückwärtigen Flächen sowie den Marginalraum bzw. die Kronenränder der Zähne zu erreichen.

Um eine gute Aufnahmequaltät sicherzustellen, kann auch die Aufnahmeeinrichtung eine Umlenkeinrichtung aufweisen, so daß bspw. auch die von den rückwärtigen Flächen der Zähne reflektierte Strahlung aufgenommen werden kann.

Eine einfache und zuverlässige Art der Umlenkung wird bei einer vorteilhaften Weiterbildung der Erfindung dadurch erzielt, daß die Umlenkeinrichtung einen Spiegel oder ein Spiegelsystem aufweist.

Eine Verbesserung der Umlenkeinrichtung kann durch Verwendung eines Zwei- oder Mehrfachspiegels oder ähnlicher geeigneter Ablenkelemente erreicht werden. Der Spiegel Kann auch wellenförmig ausgebildet sein, um eine kontinuierliche Panoramawirkung zu erzielen.

Bei asphärischer Ausbildung des Spiegels oder des Spiegelsystems wird eine besonders gleichmäßige Abbildung gewährleistet.

Bei einer Weiterbildung der Erfindung ist vorgesehen, daß die Umlenkeinrichtung einen mit einer Verspiegelung versehenen Glaskörper aufweist, um eine hohe Stabilität und zugleich geringe Wärmeausdehnung des Spiegels bzw. des Spiegelsystems bei geringer Einbautiefe zu realisieren. Um die Lichtbrechung des Glaskörpers in Teilbereichen ausnutzen zu können, kann dieser auch nur teilweise verspiegelt sein. Bei halbdurchlässiger Verspiegelung des Glaskörpers kann dieser zur holographischen Vermessung eingesetzt werden. Besonders vorteilhaft ist die Anbringung der Verspiegelung an der der Lichtquelle abgewandten Kante des Glaskörpers, weil die Verspiegelung auf diese Weise bei besonders geringer Tiefe der Umlenkeinrichtung bis weit in den Mundraum hinein verfahrbar ist.

Bei einer weiteren vorteilhaften Ausgestaltung der Erfindung ist der Spiegel oder das Spiegelsystem und/oder der Glaskörper an einem Spiegelträger angeordnet, wodurch eine besonders gleichmäßige Führung des Spiegels bzw. Glaskörpers ermöglicht wird.

Der Spiegelträger ist längs einer Führung relativ zum Mundinnenraum verfahrbar, um aus verschiedenen Positionen den Mundinnenraum auszuleuchten bzw. aufzunehmen.

Bei einer weiteren Ausgestaltung der Erfindung ist der Spiegelträger in Richtung dar Längsachse der Projektionseinrichtung, insbesondere der Beleuchtungsoptik, bzw. der Aufnahmeeinrichtung, insbesondere der Aufnahmeoptik, vorzugsweise zusammen mit der Beleuchtungsoptik und der Aufnahmeoptik, kontinuierlich oder schrittweise verfahrbar, wodurch eine zeilenförmige Abtastung des Mundinnenraums mit besonders hoher Auflösung und konstanter Schärfentiefe ermöglicht wird. Als Antrieb eignet sich besonders ein Gleichlinearstrommotor mit integriertem Positionsgeber.

Die Aufnahmeeinrichtung, u.U. auch die Projektionseinrichtung, kann relativ zu dem Spiegelträger senkrecht zur horizontalen Mittelebene des Spiegels bzw. Glaskörpers verstellbar sein, so daß dar Reflexionswinkel des Spiegels variiert werden kann, um die Panoramawirkung zwischen vorderen und hinteren Zahnflächen noch weiter zu verbessern.

Um die Umlenkeinrichtung vor äußeren Einflüssen zu schützen, und nach Gebrauch leicht desinfizieren zu können, zugleich aber ihre einwandfreie Funktion sicherzustellen, ist bei einer vorteilhaften Weiterbildung der Erfindung vorgesehen, daß die Umlenkeinrichtung in einem zumindest teilweise lichtdurchlässigen Gehäuse angeordnet ist. Das Gehäuse oder der Spiegelträger können auf seiner Innenseite oder Außenseite für die Erzeugung von Hologrammen auch halbdurchlässig verspiegelt sein.

Dieses Gehäuse kann vorteilhafterweise eine Einlage oder Auflageschicht aus Polycarbonat oder dergleichen für eine optische Spannungsmessung geeignetem Material aufweisen, so daß die Vorrichtung bei Verwendung von polarisiertem Licht und einer Verspiegelung der Folycarbonatfläche über eine Isochromatenauswertung im reflektrierten polarisierten Licht auch zur Kräftemessung eingesetzt werden kann.

Um den Patienten so wenig wie möglich zu belästigen, ist das Gehäuse der Umlenkeinrichtung bei einer weiteren Ausgestaltung der Erfindung im wesentlichen den anatomischen Raumverhältnissen des Mundinnenraums angepaßt.

Besonders vorteilhaft ist eine flache Ausbildung des Gehäuses, um dieses ohne weiteres zwischen Ober- und Unterkiefergebiß einsetzen sowie innerhalb des rotativen Bewegungsbereiches des Kiefergelenkes Extrapolationen der Bewegungsfunktion zur Findung der Terminalen-Scharnier-Achse vornehmer zu können. Bei der weiterhin vorgesehenen Kräftemessung ist eine flache Ausbildung des Gehäuses ebenfalls besonders vorteilhaft, da die Kräfte der zubeißenden Zähne in fast geschlossenen Zustand des Gebisses vermessen werden können.

Bei einer noch weiterer vorteilhaften Ausführungsform der Erfindung ist die Umlenkeinrichtung der Projektionseinrichtung zugleich als die Umlenkeinrichtung der Aufnahmeeinrichtung ausgebildet, wodurch eine besonders einfache, kompakte Bauweise ermöglicht und die zahl der möglichen Fehlerquellen reduziert wird.

Eine weitere Reduzierung möglicher Fehlereinflüsse wird bei einer anderen Ausführungsform der Erfindung dadurch erreicht, daß die Umlenkeinrichtung, die Antriebseinheit für die Umlenkeinrichtung und die Aufnahmeoptik in einem gemeinsamen Gehäuse angeordnet sind.

Ebenso ist es von Vorteil, die Projektionseinrichtung, insbesondere die Beleuchtungsoptik, die Umlenkeinrichtung und die Aufnahmeeinrichtung, insbesondere die Aufnahmeoptik, als verfahrbare Einheit auszubilden, um Fehler durch unerwünschte Relativbewegungen, insbesondere Veränderungen der Schärfentiefe, auszuschließen.

Bei einer weiteren vorteilhaften Ausgestaltung ist eine vorzugsweise durch die Position des Spiegelträgers angesteuerte Triggereinrichtung vorgesehen, mit der bspw. die Blitzfolge der Lampe des Laser derart getriggert wird, daß während der Bewegung der Umlenkeinrichtung scharfe Bilder entstehen. Auf diese Weise können Bewegungsverwischungen vermieden werden. Die Triggerfrequenz kann dabei in der Größenordnung um 10000 Hz liegen, so daß bei einer Auflösung von 10 000 Zeilen eine Aufnahmezeit von 1 sec erreichbar ist.

Eine weitere besonders vorteilhafte Ausgestaltung der Erfindung weist eine Digitalisiereinrichtung auf, welche die optischer Signale der Aufnahmeeinrichtung in elektronische Signale umwandelt. Diese Digitalisiereinrichtung entfaltet die Hauptvorteile der Erfindung dadurch, daß sie eine schnelle, umfassende und genaue Verarbeitung und Auswertung der gewonnenen Signale ermöglicht.

Als Digitalisiereinrichtung bietet sich neben einem Zeilensensor besonders die Verwendung einer herkömmlichen Videokamera mit einem Flächensensor an, die vergleichsweise kostengünstig ist und über eine ausreichende Auflösung verfügt.

Um die Möglichkeiten eines solchen. Flächensensors voll ausnutzen zu können, ist es zweckmäßig, wie bei einer weiteren Ausgestaltung der Erfindung vorgesehen, zwischen Aufnahmeeinrichtung und Digitalisiereinrichtung eine Faltungsoptik zu schalten, um das optische Zeilenmuster der Aufnahmeeinrichtung in ein Flächenmuster umzuwandeln.

Die optischen Signale der Einrichtung können dann einfacher interpretiert werden, wenn auch die Position des Spiegelträgers der Umlenkeinrichtung zu jedem Zeitpunkt erfaßt wird. Zu diesem Zweck weist die Digitalisiereinrichtung bei einer weiteren Ausgestaltung der Erfindung einen Fühler zur Erfassung der Position des Spiegelträgers auf. Die Triggerung der Lichtquelle kann dann zweckmäßigerweise ebenfalls über die Digitalisiereinrichtung erfolgen.

Ebenso ist in bestimmten Fällen, wie z.B. bei der dreidimensionalen Farbmessung, die Wellenlänge des ausgestrahlten und des empfangenen Lichtes für die Auswertung der optischen Signale von Bedeutung. Eine weitere Ausgestaltung dem Erfindung weist daher eine Digitalisiereinrichtung mit einen Fühler zur Erfassung der Wellenlänge des ausgestrahlten sowie des empfangenen, durch das Objekt transformierten und reflektierten Lichts auf, was insbesondere bei Verwendung eines durchstimmbaren Monochromators oder Lasers, z.B. eines Alexandrit-Lasers, von Bedeutung ist. Statt dessen kann auch ein Rot-Grün-Blau-Farbsensor mit Weißabgleich verwendet werden.

Bei einer weiteren Ausgestaltung der Erfindung ist die Digitalisiereinrichtung auch mit einer Fühler zur vorzugsweise indirekter Erfassung; evtl. auch zur Einstellung des Streifenabstands bzw. der Streifenbreite des Streifenmusters versehen, da dieser bzw. diese für die Auswertung der optischen Signale mittels Triangulation ebenfalls von Bedeutung ist.

Bei einer vorteilhaften Weiterbildung der Erfindung ist vorgesehen, daß die Projektionseinrichtung durch Erhöhung der Strahlungsenergie auch zur Bearbeitung des Mundinnenraums, insbesondere zur Bearbeitung der Zähne mittels Laser einsetzbar ist. Auf diese Weise kann die Projektionseinrichtung zugleich als Bearbeitungsinstrument verwendet werden.

Um neben der Erfassung der geometrisch-topographischen Gestalt des Mundinnenraums und der dreidimensionalen Farberkennung der transluzenten Zähne auch Aussagen über die Zahnbewegung und Zahnkräfte unter Krafteinfluß treffen zu können, ist bei einer weiteren verteilhaften Ausgestaltung der Erfindung vorgesehen, daß der intraorale Vorrichtungsabschnitt als Kräftemeßeinrichtung ausgebildet ist.

Bei Verwendung eines pyroelektrischen Detektors, wie bspw. einer Folie, kann die Kräftemeßeinrichtung besonders flach ausgebildet sein, so daß die Kräftemessungen in nahezu geschlossenem Zustand des Gebisses durchgeführt werden können.

Um die Kräfte in verschiedenen Richtungen gleichzeitig messen zu können, weist der pyroelektrische Detektor bei einer besonders vorteilhaften Ausgestaltung der Erfindung zweiachsig gereckte Schichten aus pyroelektrischem Material auf.

Bei einer besonders vorteilhaften Ausgestaltung der Erfindung ist die Kräftemesseinrichtung min einer Isochromatenauswerteinrichtung versehen, welche neben einer Quelle polarisierten Lichts bzw. einen Polarisator eine vorzugsweise in das Gehäuse der Umlenkeinrichtung eingesetzte Einlage aus Polycarbonat oder dergl. Material nebst einer verspiegelten Fläche und einen vorzugsweise der Aufnahmeoptik zugeordneten Analysator aufweist.

Weitere Ziele, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: schematisch eine Prinzipskizze einer erfindungsgemäßen Abtastvorrichtung,
- Fig. 2a: eine Draufsicht auf eine in einem Vorrichtungsgehäuse angeordnete aus Umlenkeinrichtung, Beleuchtungsoptik, Aufnahmeoptik und Antriebseinheit für die Umlenkeinrichtung bestehende erfindungsgemäße Vermessungseinrichtung,
- Fig. 2b: einen Schnitt der Vermessungseinrichtung gemäß Fig. 2a entlang der Linie B-B,
- Fig. 2c: einen Schnitt des intraoralen Vorrichtungsabschnitts der Vermessungseinrichtung gemäß Fig. 2a, entlang der Linie A-A,
- Fig. 3a: einen senkrechten Schnitt durch den intraorale Vorrichtungsabschnitt entlang der Linie A-A gemäß Fig. 3b,
- Fig. 3b: einen Horizontalschnitt durch den intraoralen Vorrichtungsabschnitt entlang der Linie B-B gemäß Fig. 3a,
- Fig. 4: in Draufsicht eine schematische Darstellung des Strahlenverlaufs der von einem mit einem asphärischen wellenförmigen Spiegel versehenen Glaskörper reflektierten Strahlung,
- Fig. 4a: eine Rüchansicht der Zähne mit einer schematischen Darstellung des in eine vertikale Ebene projizierten Strahlenverlaufs der von einem asphärischen wellenförmigen Spiegel reflektierten Strahlung,
- Fig. 5a: eine Draufsicht auf einen mit einem asphärischen wellenförmigen Spiegel versehenen Glaskörper der Umlenkeinrichtung,
- Fig. 5b: schematisch die Anordnung des intraoralen Vorrichtungsabschnitts zwischen den Zähnen des Ober- und Unterkiefers,
- Fig. 6a: einen senkrechten Schnitt durch den Glaskörper der Umlenkeinrichtung entlang der Linie A-A gemäß den Fig. 5a und 5b,
- Fig. 6b: einen senkrechten Schnitt durch eine weitere Ausführungsform eines Glaskörpers der Umlenkeinrichtung entlang der Linie A-A gemäß der Fig. 5a und 5b,
- Fig. 6c: einen senkrechten Schnitt durch eine noch weitere Ausführungsform eines Glaskörpers der Umlenkeinrichtung entlang der Linie A-A gemäß der Fig. 5a und 5b,
- Fig. 7: in Seitenansicht eine schematische Darstellung eines Abschnittes der erfindungsgemäßen Vermessungseinrichtung in zwischen Ober- und Unterkiefer eingesetztem Zustand,
- Fig. 8: im senkrechten Schnitt eine schematische Darstellung der Position des intraoralen Vorrichtungsabschnitts relativ zu den Zähnen des Ober- und Unterkiefers und zu den sonstigen definierten Schädelpunkten, und
- Fig. 9: in Draufsicht eine schematische Darstellung der verschiedenen Positionen des intraoralen Vorrichtungsabschnitts der erfindungsgemäßen Abtastvorrichtung bezogen auf die definierten Schädelpunkte.

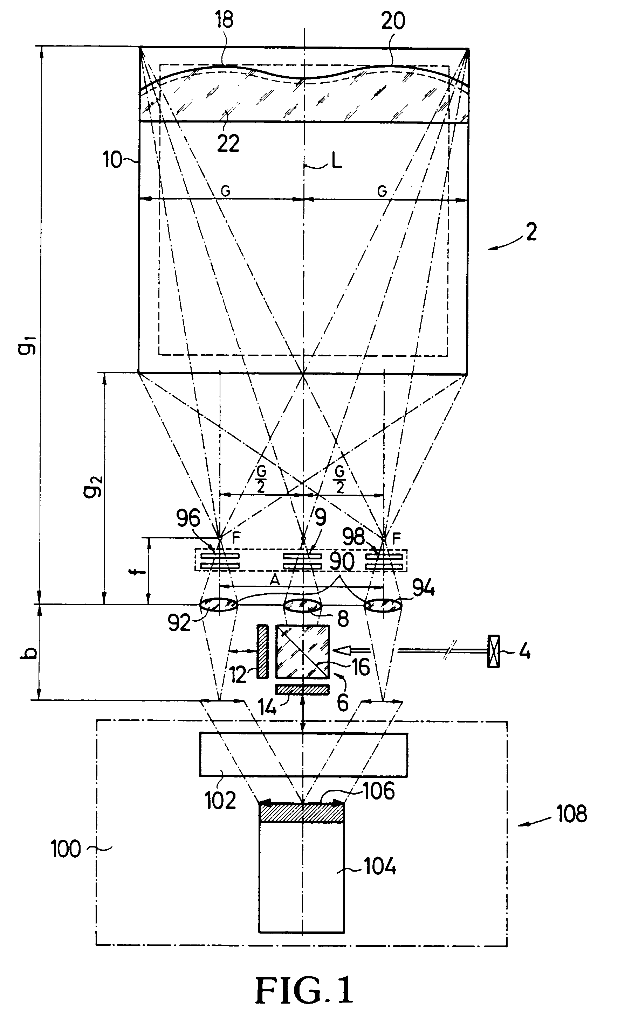

Die in Fig. 1 dargestellte Abtastvorrichtung 2 besteht im wesentlicher aus einer Projektionseinrichtung, einer Aufnahmeeinrichtung und einer Auswerteeinrichtung, wobei im vorliegenden Fall Projektionseinrichtung und Aufnahmeeinrichtung teilweise von gleichen Elementen gebildet werden. Die Projektionseinrichtung weist eine bspw. als Laser oder Laserdiode ausgebildete Quelle optischer Strahlung 4 auf, deren Licht mittels eines Interferometers 6 über eine Beleuchtungsoptik 8, die ggf. mit einem elektronisch einstellbaren Polarisator 9 versehen ist, und eine Umlenkeinrichtung 10 als Streifenmuster auf die Oberflächen des Mundinnenraumes im Ober- und Unterkieferbereich projiziert wird. Das Licht kann jedoch zur Farbmessung der Zähne auch unmittelbar, d.h. ohne Zwischenschaltung eines Interferometers 6, auf die Zähne projiziert werden. In diesem Fall wird als Quelle optischer Strahlung 4 eine Lichtquelle eingesetzt, die ein dem Sonnenlicht ähnliches Licht oder UV-Licht oder Wolframlicht, etc. ausstrahlt. Die Farbmessung selbst erfolgt mit einem RGB-Sensor. Bei dem Interferometer 6 handelt es sich um ein Michelson-Interferometer, welches mit zwei verstellbaren Spiegeln 12, 14 und einer halbdurchlässigen planparallelen Platte 16 versehen ist. Die Spiegel 12, 14 können zur exakten Einstellung eines gewünschten Strahlenabstandes piezoelektrisch verstellt oder durch vorgegebenen festen Abstand eingestellt werden. Selbstverständlich können auch andere Interferometer verwendet werden. Die Umlenkeinrichtung 10 weist einen wellenförmigen asphärisch ausgebildeten Spiegel 18 auf, welcher an einer geschliffenen Kante 20 eines Glaskörpers 22 bspw. mittels Aufdampfen angebracht ist. Die Aufnahmeeinrichtung besteht u.a. ebenfalls aus der Umlenkeinrichtung 10 und einer Aufnahmeoptik 90, welche ein Sterolinsenpaar 92, 94 und ggf. einen elektronisch einstellbaren Analysator 96, 98 für polarisiertes Licht aufweist. An die Aufnahmeoptik 90 schließt sich eine Digitalisiereinrichtung 100 einer Auswerteeinrichtung 108 an, die eine Kamera 104 mit einem Zeilen - oder Flächensensor 106 und ggf. eine Faltungsoptik 102 einschließt. Die Signale der Digitalisierungseinrichtung 100 werden an eine nicht dargestellte Datenverarbeitungsanlage der Auswerteeinrichtung weitergeleitet, welche auch einen Bildschirm zur sichtbaren Darstellung der aufgenommenen Reflexionsbilder aufweisen kann.

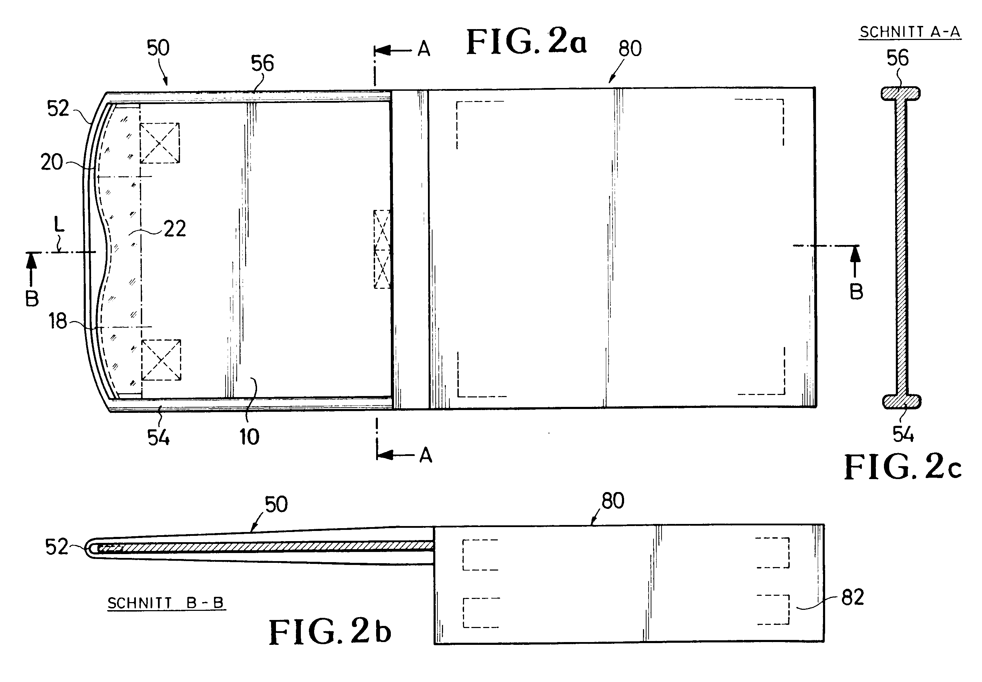

In Fig. 2 ist die aus Projektionseinrichtung, Aufnahmeeeinrichtung und Digitalisierungseinrichtung bestehende Vermessungselnrichtung in verschiedenen Ansichten und Schnitten dargestellt. Der an seiner rückwärtigen Kante 20 mit dem Spiegeln 18 versehene Glaskörper 22 der Umlenkeinrichtung 10 ist in einem in der Zeichnung nach oben und nach unten lichtdurchlässigen Gehäuse 50 angeordnet, welches seitlich im wesentlichen aus einem Abschlußschenkel 52 und zwei Gehäuseschenkeln 54, 56 gebildet ist. An das für die Einführung in den Mundinnenraum bestimmte (intraorale) Gehäuse 50 schließt sich ein Außengehäuse 80 an, welches außer der Beleuchtungsoptik 8 und der Aufnahmeoptik 90 auch eine Antriebseinheit 82 für die Linearbewegung des Glaskörpers 22 mit dem Spiegel 18 in Richtung der Längsachse L aufnimmt.

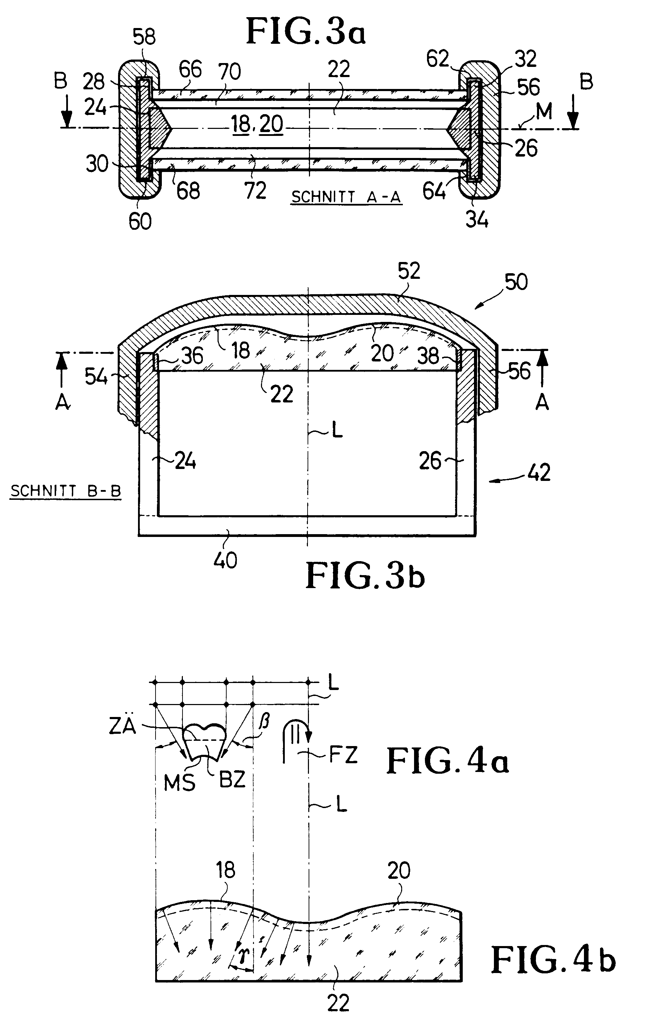

In den Fig. 3a und 3b ist der Aufbau der intraoralen Umlenkeinrichtung 10 deutlicher dargestellt. An dem mit dem Spiegel 18 versehenen Glaskörper 22 sind parallel zu der Längsachse L rechts und links Tragschienen 24, 26 befestigt, welche zur Erhöhung der Steifigkeit mit bezüglich der horizontalen Mittelebene M nach oben bzw. nach unten gerichteten Vorsprüngen 28, 30, 32, 34 versehen sind. Die Vorsprünge 28, 30, 32, 34 der Tragschienen 24, 26 erstrecken sich in Nuten 58, 60, 62, 64 der Gehäuseschenkel 54, 56 des Gehäuses 50. Die Tragschienen 24, 26 des Glaskörpers 22 stehen mit dem Gehäuse 50 nicht in Berührung, um äußere Belastungen nicht auf die sensible Umlenkeinrichtung 10 zu übertragen. Der Glaskörper 22 ist durch eine obere Abdeckplatte 66 und eine untere Abdeckplatte 68, welche zumindest teilweise aus lichtdurchlässigem Material besteher können, geschützt. Die Abdeckplatten 66, 68 können auch aus Polycarbonat oder dgl. Material bestehen oder zumindest eine Einlage oder Auflageschicht aus einem solchen Material aufweisen. Zwischen dem Glaskörper 22 und den Abdeckplatten 66, 68 befinden sich Zwischenspalte 70, 72. Der Glaskörper 22 ist in Ausnehmungen 36, 38 an der einen Seite der Tragschienen 24, 26 angebracht. Auf der anderen Seite der Tragschienen 24, 26 ist ein Verbindungssteg 40 vorgesehen, welcher zusammen mit den Tragschienen 24, 26 und dem Glaskörper 22 einen Spiegelträger 42 bildet. An dem Verbindungssteg 40 des Spiegelträgers 42 sind in festem Abstand die Projektions- und die Aufnahmeeinrichtung angebracht, wodurch die Schärfentiefe stets konstant bleibt.

In den Fig. 4a und 4b sind die verschiedenen Reflexionswinkel der auf den an der Kante 20 des Glaskörpers 22 angeordneten Spiegel 18 auftreffenden Lichtstrahlen der Projektionseinrichtung verdeutlicht. Durch die wellenförmige Ausgestaltung des Spiegels 18 wird eine gleichmäßige panoramaartige Ausleuchtung sowohl der Frontzähne FZ als auch der Backenzähne BZ sowie des Marginalraums MS bzw. Kronenrandes, der sich projektiv innerhalb des Zahnäquators ZÄ befindet, gewährleistet. Fig. 4a zeigt den Strahlenverlauf in einer vertikalen Ebene, während Fig. 4b den horizontalen Strahlenverlauf wiedergibt.

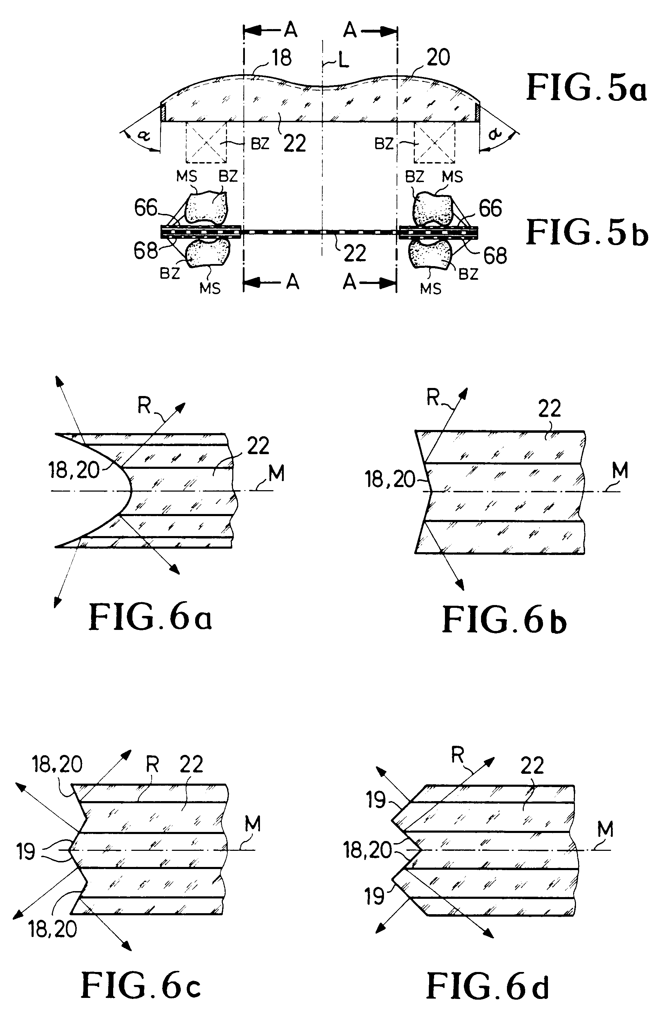

In den Fig. 5a und 5b ist die Lage des Glaskörpers 22 der Umlenkeinrichtung 10 relativ zu den zu vermessenden Zähnen dargestellt. Die aus gestrichelten Linien gebildeten Quadrate in Fig. 5a geben die Position der hintersten Backenzähne BZ, der sog. 7-er bzw. 8-er Molaren, wieder. Der Glaskörper 22 befindet sich dabei in seiner hintersten möglichen Position, so daß auch die rückwärtigen Flächen der 7-er bzw. 8-er Molaren noch erfaßt werden können. In Fig. 5b ist der zwischen Ober- und Unterkiefergebiß eingesetzte Glaskörper 22 im vertikalen Schnitt abgebildet. Die Abdeckplatten 66, 68, auf welche die Zähne zur Ortsfixierung bzw. zur Kraftmessung beißen können, sind dabei nur im Bereich der Aufbißzone der Ober- und Unterkieferzähne dargestellt.

Bild 6a verdeutlicht das stirnseitige Profil des Glaskörpers 22 an seiner mit dem Spiegel 18 versehenen Reflexionskante 20, welches gewährleistet, daß die Projektionsstrahlen nach oben und nach unten umgelenkt werden, während die aus den Fig. 4b und 5a ersichtliche Spiegelkrümmung deren Umlenkung in seitlicher Richtung bewirken. Die von der Projektionseinrichtung parallel auf den an der Kante 20 des Glaskörpers 22 vorgesehenen Spiegel 18 geworfenen Lichtstrahlen R werden aufgrund der parabelförmigen Spiegelkontur gleichmäßig nach oben und nach unten reflektiert, so daß der gesamte Mundinnenraum simultan ausgeleuchtet wird. Umgekehrt werden aufgrund der speziellen Spiegelgestalt auch die von den zu vermessenden Oberflächen des Mundinnenraumes zurückgeworfenen Reflexionsstrahlen in Richtung parallel zur Längsachse L umgelenkt.

Die in Fig. 6b dargestellte Kontur der mit einen Spiegel 18 versehenen Kante 20 des Glaskörpers 22 bewirkt ebenfalls eine Umlenkung der von der Projektionseinrichtung ausgestrahlten Lichtstrahlen R in den oberen und unteren Mundinnenraum, wobei der Umlenkwinkel jeweils konstant ist. Eine solche V-förmige Spiegelkontur ist leicht herstellbar und für eine zeilenweise Abtastung des Mundinnenraumes geeignet.

In Fig. 6c ist eine Glaskörper 22 mit einer W-förmigen Kontur der Kante 20 dargestellt, wobei jeweils nur die äußeren Abschnitte mit einem Spiegel 18 versehen sind, während die beiden inneren Abschnitte eine unverspiegelte Oberfläche 19 aufweisen. In dieser Abschnitten werden die von der Projektionseinrichtung ausgestrahlten Lichtstrahlen R nicht reflektiert, sondern an der Grenzfläche aufgrund der unterschiedlichen Dichte von Glaskörper 22 und Umgebungsluft gebrochen. Der Umlenkwinkel an den unverspiegelten Oberflächen 19 des Glaskörpers 22 ist vergleichsweise klein, so daß auch hinter dem Glaskörper 22 befindliche Oberflächen des Mundinnenraumes ausgeleuchtet werden können.

Fig. 6d zeigt eine ebenfalls W-förmige Kontur der Kante 20, wobei die unverspiegelten Oberflächen 19 des Glaskörpers 22 außen und die Spiegel 18 innen angeordnet sind. Die Kante 20 des Glaskörpers 22 kann auch eine halbkreisförmige, facettenartige oder sonstige geeignete Kontur sowohl in horizontaler als auch in vertikaler Richtung aufweisen. Darüber hinaus ist auch eine Ablenkung durch holographische Elemente erzielbar.

Fig. 7 zeigt die Vermessungseinrichtung schematisch in einem mit ihrem vorderen intraoralen Vorrichtungsabschnitt in den Mundinnenraum eingesetzten Zustand. Die Umlenkeinrichtung 10 liegt dabei mit dem Gehäuse 50 an der Unterseite der Zähne des Oberkiefers an. Der verspiegelte Glaskörper 22 der Umlenkeinrichtung 10 ist sowohl in seiner maximal ausgefahrenen Stellung dargestellt, in der er die Strahlung der Beleuchtungsoptik 8 auch auf die Rückseite der Zähne projiziert bzw. die reflektierte Strahlung von der Rückseite der Zähne zur Aufnahmeoptik 90 umlenkt, als auch in seiner maximal eingefahrenen Stellung, in der er fast im Außengehäuse 80 verschwindet und die Frontseite der Frontzähne beleuchtet bzw. deren Reflexionen zur Aufnahmeoptik 90 umlenkt. Durch eine Triggerung der Bestrahlung können besonders kortrastreiche Bilder ohne Bewegungsverwischungen erzeugt werden (Shutter-Effekt). Der Unterkiefer kann während der Messung zur exakten Bestimmung der Kiefergelenkbewegungsfunktion auf- und zubewegt werden.

In Fig. 8 ist die Lage des Glaskörpers 22 der Umlenkeinrichtung 10 relativ zu den Zahnäquatoren ZÄ der Backenzähne BZ dargestellt. Für die Auswertung der Meßdaten ist die reproduzierbare Lage des Glaskörpers 22 relativ zu den verschiedenen Schädelpunkten von Bedeutung. Zu diesem Zweck sind am Schädel drei Fixpunkte, z.B. der Nasenpunkt NP₁ und die Augenpunkte AP₁ und AP₂, definiert, die einen Koordinatenraum aufspannen und eine reproduzierbare Positionierung der Abtastvorrichtung 2 ermöglichen. Diese definierten Fixpunkte werden auch bei Röntgenaufnahmen des Schädels berücksichtigt, so daß eine genaue Koordinaten-Koinzidenz der optischen Bilder zu Röntgenbildern hergestellt werden kann.

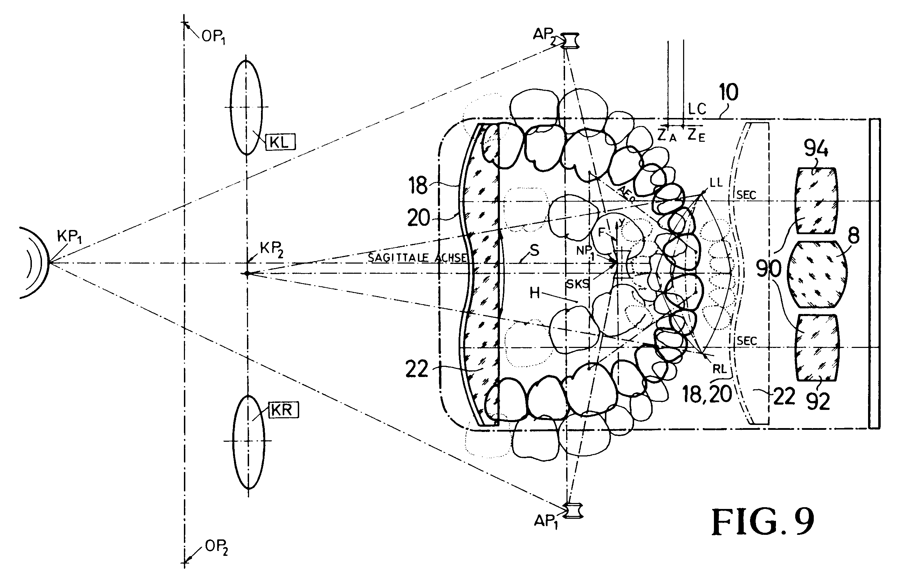

Fig. 9 verdeutlicht die geometrische Lage der Beleuchtungsoptik 8 und der Aufnahmeoptik 90 relativ zu der Umlenkeinrichtung 10 sowie die Lage des mit dem Spiegel 18 versehenen Glaskörpers 22 der Umlenkeinrichtung 10 relativ Zu den definierten Schädelpunkten und dem aufzunehmenden Gebiß des Unter- oder Oberkiefers, auch wenn sich der intraorale Vorrichtungsabschnitt seitlich relativ zu letzterem verschiebt. Um eine Koppelung zwischen den mit der Abtastvorrichtung 2 und den mittels Röntgentechnik gewonnenen Bildern herstellen zu können, können an den Schädelfixpunkten bspw. drei Bleikugeln angebracht werden, die sowohl für die Messungen mit der Abtastvorrichtung 2 einen Koordinatenursprung definieren als auch mittels der Röntgentechnik exakt zu erfassen sind, so daß die optischen Bilder der Abtastvorrichtung 2 mit den Röntgenbildern bezüglich des Schädelkoordinatensystem exakt in Koinzidenz zu bringen sind.

Zu Vermessung des Ober- und Unterkiefergebisses wird zunächst das intraorale Gehäuse 50 zwischen Ober- und Unterkiefergebiß eingesetzt, so daß die Zähne des Ober- und Unterkiefergebisses teilweise auf der oberen bzw. unteren Abdeckung 66 bzw. 68 des Gehäuses 50 der Umlenkeinrichtung 10 zu liegen kommen. Wenn der intraorale Vorrichtungsabschnitt richtig eingesetzt ist, wird der als Quelle optischer Strahlung 4 vorgesehene Laser oder die Laserdiode der Projektionseinrichtung eingeschaltet. Zur simultanen geometrisch-topographischen Vermessung des Ober- und Unterkiefergebisses wird das Licht des Lasers oder der Laserdiode direkt oder über einen Lichtleiter dem Interferometer 6 zugeführt und von dort über eine Beleuchtungsoptik 8 und ggf. einen Polarisator 9 als Streifenmuster in Richtung der Längsachse L der Abtastvorrichtung 2 auf den Spiegel 18 der Umlenkeinrichtung 10 projiziert. Von dort wird dieses mittels Interferenz erzeugte Streifenmuster in den Mundinnenraum des Ober- und Unterkieferbereichs umgelenkt, und zwar wird die Strahlung, die auf die bezüglich der horizontalen Mittelebene M obere Hälfte des Glaskörpers 22 fällt, in den Oberkieferbereich und die Strahlung, die bezüglich der horizontalen Mittelebene M auf die untere Hälfte des Glaskörpers 22 fällt, in den Unterkieferbereich umgelenkt. Der Spiegel 18 bzw. Glaskörper 22 kann in vertikalem Querschnitt ein parabelförmiges, ein V oder W-förmiges, ein halbkreisförmiges oder ein sonstiges geeignetes Profil aufweisen. Je nach dem Profil und der Stellung des Spiegels 18 bzw. des Glaskörpers 22 wird das von dem Interferometer 6 erzeugte Streifenmuster entsprechend verzerrt auf die Oberfläche und/oder das tansluzente Volumeninnere des Mundinnenraums, insbesondere der transluzenten Zähne, projiziert. Dort entsteht dadurch ein feines Muster von heller und dunklen Streifen.

Das projizierte Streifenmuster wird von der Oberfläche und/oder dem transluzenten Volumeninneren des Mundinnenraums, insbesondere der transluzenten Zähne, entsprechend der geometrisch-topographischen Gestalt und/oder dem aus dem transluzenten Volumeninneren entsprechend der dreidimensionalen Pigmentanordnung reflektiert und über den Spiegel 18 bzw. Glaskörper 22 der Umlenkeinrichtung 10 der Aufnahmeoptik 90 zugeführt. Die Aufnahmeoptik 90 bildet das reflektierte Streifenmuster evtl. über Licht- oder Bildleiter, ggf. über eine Faltungsoptik 102, auf den Zeilen- oder Flächensensor 106 bspw. einer Videokamera 104 ab. Die Videokamera 104 verarbeitet die empfangenen optischen Signale in elektronische Signale und speist diese in eine nicht dargestellte Datenverarbeitungsanlage ein. Dort können die elektronischen Signale unter Berücksichtigung zahlreicher Parameter, wie Wellenlänge des projizierten und des aufgenommenen Lichts, theoretischer Streifenabstand des Streifenmusters, Stellung des Umlenkspiegels relativ zur Projektionseinrichtung, Form des Umlenkspiegels, Form des Glaskörpers, Brechungsindex des Glaskörpers, Dicke der Abdeckungen, Brechungsindex der Abdeckungen, Art der optischen Linsen der Leuchtungs- und Aufnahmeoptik, Paralaxenabstand des Stereolinsenpaars, u.a., mittels komplexer Rechenverfahren so ausgewertet werden, daß die geometrisch-topographische Gestalt des Mundinnenraums und die Pigmentanordnung im dreidimensionalen transluzenten Raum insbesondere im Volumeninneren der Zähne exakt bestimmbar ist. Die Oberflächentopographie des Mundinnenraumes und die Farbanordnung im Inneren der transluzenten Zähne kann auf einem Bildschirm dreidimensional dargestellt werden.

Statt der besonders geeigneten optischen Strahlung können zur Vermessung der geometrisch-topographischen Gestalt des Mundinnenraums auch Röntgenstrahlen, Radarstrahlen oder Ultraschall eingesetzt werden. Die Ablenkungselemente der Umlenkeinrichtung sind jeweils an die verwendete Strahlung anzupassen.

Zur Messung der einwirkenden Kräfte werden die bspw. aus Polycarbonat bestehenden oder mit Einlagen oder Auflageschichten aus solchen versehenen halbdurchlässig verspiegelten Abdeckplatten 66, 68 der Umlenkeinrichtung 10 mit bspw. mittels Polarisator 9 polarisiertem Licht einer Quelle optischer Strahlung 4 der Projektionseinrichtung bestrahlt. In den Abdeckplatten 66, 68 entstehen dadurch schlierenförmige verschiedenfarbige Abdrücke, die im reflektierten Licht mittels eines vorzugsweise der Aufnahmeoptik 90 zugeordneten Analysators 96, 98 durch eine Isochromatenauswertung zur Bestimmung der in die Abdeckplatten 66, 68 eingeleiteten Kräften herangezogen werden können, so daß die Abtastvorrichtung auch zur exakten Kräftemessung bezüglich der Kiefergelenkstellung bzw. (mittels Extrapolation) der Zahnkontakte verwendet werden kann. Eine solche Kräftemessung kann auch in an sich bekannter Weise mittels pyroelektrischer Detektoren durchgeführt werden.

### Bezugszeichenliste:

- 2: Abtastvorrichtung
- 4: Quelle optischer Strahlung
- 6: Interferometer
- 8: Beleuchtungsoptik
- 9: Polarisator
- 10: Umlenkeinrichtung
- 12, 14: Spiegel
- 16: halbdurchlässige planparallele Platte
- 18: Spiegel bzw. Spiegelsystem
- 19: unverspiegelte Oberfläche
- 20: Kante
- 22: Glaskörper
- 24, 26: Tragschienen
- 28, 30: Vorsprünge
- 32, 34: Vorsprünge
- 36, 38: Ausnehmungen
- 40: Verbindungssteg
- 42: Spiegelträger
- 50: Gehäuse
- 52: Abschlußschenkel
- 54, 56: Gehäuseschenkel
- 58, 62: obere Nuten
- 60, 64: untere Nuten
- 66: obere Abdeckplatte
- 68: untere Abdeckplatte
- 70, 72: Zwischenspalte
- 80: Außengehäuse
- 82: Antriebseinheit
- 90: Aufnahmeoptik
- 92, 94: Stereolinsenpaar
- 96, 98: Analysator
- 100: Digitalisiereinrichtung
- 102: Faltungsoptik
- 104: Kamera (CCD-Farb-Video-Kamera)
- 106: Flächensensor (CCD-Array)
- 108: Auswerteeinrichtung
- A: Parallaxenabstand
- B: Bildgröße
- BZ: Backenzahn
- D: Linsendurchmesser
- F: Brennpunkt
- FZ: Frontzahn
- G: Gegenstandsgröße
- L: Längsachse
- M: Mittelebene
- MS: Marginalsaum
- R: Reflexionsstrahlen
- S: Schärfentiefe
- T: Objekttiefe
- ZÄ: Zahnäquator
- b: Abstand Linsenmitte - Bildebene
- f: Brennweite
- g: Abstand Linsenmitte - Objektebene
- α: Krümmungswinkel
- β: Feflexionswinkel (vertikal)
- γ: Reflexionswinkel (horizontal)

## Patentansprüche

1. Verfahren zur Ausmessung eines Raumes, insbesondere eines Mundinnenraums mit Ober- und Unterkiefergebiß, mittels einer Abtastvorrichtung (2), welche wenigstens teilweise in den auszumessenden Raum, vorzugsweise Mundinnenraum, eingeführt wird, wobei als Abtastvorrichtung eine optische Vermessungseinrichtung (Fig.2) verwendet wird, deren optische Signale in elektronische, mittels einer Datenverarbeitungsanlage auswertbare Signale umgewandelt werden, wobei die Vermessungseinrichtung eine Projektionseinrichtung umfaßt, mittels der optische Strahlung von einer Strahlungsquelle (4) über eine Umlenkeinrichtung (10, 18, 20, 22) auf die Oberfläche und/oder das transluzente Volumeninnere des zu vermessenden Mundinnenraums, insbesondere der transluzenten Zähne, projiziert wird und wobei die von den Oberflächen und/oder dem transluzenten Volumeninneren reflektierte Strahlung über die Umlenkeinrichtung (10, 18, 20, 22) einer Aufnahmeeinrichtung zugeführt wird, dadurch gekennzeichnet, daß die optische Strahlung über die Umlenkeinrichtung (10, 18, 20, 22) simultan auf die Oberflächen des Ober- und Unterkiefers und/oder das transluzente Volumeninnere des Ober- und Unterkiefers insbesondere der transluzenten Zähne, projiziert wird, und daß die von den Oberflächen und/oder dem transluzenten Volumeninneren reflektierte Strahlung simultan über die Umlenkeinrichtung (10, 18, 20, 22) der Aufnahmeeinrichtung zugeführt wird.

2. Verfahren nach Anspruch 1, dadurch gekennzeichnet, daß die optische Strahlung in Form eines z.B. mittels Interferenz erzeugten Streifenmusters auf die Oberflächen und/oder das transluzente Volumeninnere des zu vermessenden Mundinnenraums, insbesondere der transluzenten Zähne projiziert wird.

3. Verfahren nach Anspruch 1 oder 2, dadurch gekennzeichnet, daß die reflektierte Strahlung mit einer stereogrammetrisch oder nach dem Triangulationsprinzip oder nach dem Prinzip eines Hologramms arbeitenden Aufnahmeeinrichtung aufgenommen wird.

4. Verfahren nach Anspruch 3, dadurch gekennzeichnet, daß die projizierte Strahlung und/oder die reflektierte Strahlung infolge einer Relativbewegung der Projektionseinrichtung und/oder der Aufnahmeeinrichtung bzw. eines Teils derselben, z.B. einer Umlenkeinrichtung (10, 18, 20, 22), gegenüber dem Mundinnenraum zeilenweise, also nach Art eines Scanning, auf die Oberflächen und/oder das transluzente Volumeninnere des zu vermessenden Mundinnenraums, insbesondere der transluzenten Zähne, projiziert und/oder von den Oberflächen und/oder dem transluzenten Volumeninneren des Mundinnenraums aufgenommen wird.

5. Verfahren nach Anspruch 3 oder 4, dadurch gekennzeichnet, daß die optischen Signale der reflektierten Strahlung, ggf. mittels einer Faltungsoptik, auf einen Flächensensor (z.B. CCD-Sensor-Chip) abgebildet werden.

6. Verfahren nach einem der Ansprüche 1 bis 5, dadurch gekennzeichnet, daß die elektronischen Signale zu Bildern verarbeitet und diese auf einem Bildschirm sichtbar gemacht werden.

7. Verfahren nach Anspruch 6, dadurch gekennzeichnet, daß die vorzugsweise mittels CAD-Modellierung verarbeiteten elektronischen Signale einem CAM-Fertigungssystem zur Herstellung von Zahnersatzteilen zugeführt werden.

8. Verfahren nach einem der Ansprüche 1 bis 7, dadurch gekennzeichnet, daß die Projektionseinrichtung durch Erhöhung der Energiezufuhr zur unmittelbaren Bearbeitung von Oberflächen des Mundinnenraums, insbesondere der Zähne eingesetzt wird.

9. Abtastvorrichtung zur Durchführung des Verfahrens nach einem der Ansprüche 1 bis 8, mit einer vorzugsweise in einem extraoralen Vorrichtunsabschnitt vorgesehenen Quelle optischer Strahlung (4) und einer eine Beleuchtungsoptik (8) aufweisenden Projektionseinrichtung, welche optische Strahlung über eine Umlenkeinrichtung (10, 18, 20, 22) auf die Oberflächen und/oder das transluzente Volumeninnere des Mundinnenraums, insbesondere des transluzenten Volumens der Zähne, projiziert, einer Aufnahmeeinrichtung, welche die von den Oberflächen und/oder dem transluzenten Volumeninneren reflektierte Strahlung über die Umlenkeinrichtung (10, 18, 20, 22) einer Aufnahmeoptik (90) zuführt und mit einer vorzugsweise in einem extraoralen Vorrichtungsabschnitt vorgesehenen Auswerteeinrichtung (108), welche die aufgenommene reflektierte Strahlung auswertet, dadurch gekennzeichnet, daß die optische Strahlung über die Umlenkeinrichtung (10, 18, 20, 22) gleichzeitig auf die Oberflächen des Ober- und des Unterkiefers und/oder das transluzente Volumeninnere des Ober- und des Unterkiefers, insbesondere auf die transluzenten Zähne, projizierbar ist.

10. Vorrichtung nach Anspruch 9, dadurch gekennzeichnet, daß die Projektionseinrichtung ein definiertes optisches Strahlenmuster auf die Oberflächen des Mundinnenraums projiziert.

11. Vorrichtung nach Anspruch 10, dadurch gekennzeichnet, daß das von der Projektionseinrichtung erzeugte optische Muster ein Streifenmuster ist.

12. Vorrichtung nach einem der Ansprüche 9 bis 11, dadurch gekennzeichnet, daß die Projektionseinrichtung ein Interferometer (6), bspw. ein Michelson-Interferometer, aufweist.

13. Vorrichtung nach einem der Ansprüche 9 bis 12, dadurch gekennzeichnet, daß die Projektionseinrichtung eine Lichtquelle (4) aufweist, welche vorzugsweise ein dem Sonnenlicht ähnliches Licht (sog. Weißlicht) oder UV-Licht oder Wolframlicht ausstrahlt.

14. Vorrichtung nach einem der Ansprüche 9 bis 13, dadurch gekennzeichnet, daß die Projektionseinrichtung als Lichtquelle (4) ausgebildete Quelle optischer Strahlung einen vorzugsweise durchstimmbaren Laser oder Monochromator aufweist, der vorzugsweise polarisiertes Licht ausstrahlt.

15. Vorrichtung nach einem der Ansprüche 9 bis 14, dadurch gekennzeichnet, daß die Projektionseinrichtung eine eine Linse oder ein Linsensystem aufweisende Beleuchtungsoptik (8) zur gleichmäßigen Ausleuchtung des Mundinnenraums aufweist.

16. Vorrichtung nach Anspruch 9, dadurch gekennzeichnet, daß die Umlenkeinrichtung (10) einen Spiegel oder ein Spiegelsystem (18) aufweist.

17. Vorrichtung nach Anspruch 9 oder 16, dadurch gekennzeichnet, daß die Umlenkeinrichtung (10) einen Zwei- oder Mehrfachspiegel (18) und/oder facettenartige Anlenkelemente und/oder holographische Ablenkelemente aufweist.

18. Vorrichtung nach Anspruch 16 oder 17, dadurch gekennzeichnet, daß der Spiegel oder das Spiegelsystem (18) asphärisch ausgebildet ist.

19. Vorrichtung nach einem der Ansprüche 16 bis 18, dadurch gekennzeichnet, daß die Umlenkeinrichtung (10) einen vorzugsweise an seiner der Lichtquelle (4) abgewandten Kante (20) mit einer Verspiegelung und/oder einer teilweisen Verspiegelung und/oder einer halbdurchlässigen Verspiegelung und/oder facettenartigen Ablenkelementen und/oder holographischen Ablenkelementen versehenen Glaskörper (22) aufweist.

20. Vorrichtung nach einem der Ansprüche 16 bis 19, dadurch gekennzeichnet, daß der Spiegel oder das Spiegelsystem (18) und/oder der Glaskörper (22) an einem, vorzugsweise mit Tragschienen (24, 26) versehenen, Spiegelträger (42) angeordnet sind/ist.

21. Vorrichtung nach Anspruch 20, dadurch gekennzeichnet, daß der Spiegelträger (42) relativ zum Mundinnenraum, vorzugsweise in einer extraoral angeordneten Linearführung, verfahrbar ist.

22. Vorrichtung nach Anspruch 20 oder 21 , dadurch gekennzeichnet, daß der Spiegelträger (42) in Richtung der Längsachse (L) der Projektionseinrichtung, insbesondere der Beleuchtungsoptik (8) bzw. der Aufnahmeeinrichtung, insbesondere der Aufnahmeoptik (90), kontinuierlich oder schrittweise, verfahrbar ist.

23. Vorrichtung nach einem der Ansprüche 20 bis 22, dadurch gekennzeichnet, daß die Aufnahmeeinrichtung relativ zu dem Spiegelträger (42) senkrecht zur horizontalen Mittelebene (M) des Spiegels (18) bzw. Glaskörpers (22) und/oder waagerecht in der horizontalen Mittelbene (M) des Spiegels (18) bzw. Glaskörpers (22) und senkrecht zur Längsachse (L) der Projektionseinrichtung verstellbar ist.

24. Vorrichtung nach einem der Ansprüche 9 und 16 bis 23, dadurch gekennzeichnet, daß die Umlenkeinrichtung (10) in einem zumindest teilweise lichtdurchlässigen oder halbdurchlässig verspiegelten Gehäuse (50) angeordnet ist.

25. Vorrichtung nach Anspruch 24, dadurch gekennzeichnet, daß das Gehäuse (50) der Umlenkeinrichtung (10) zumindest in seinem mit den Zähnen in Kontakt tretenden Bereich eine Einlage aus Polycarbonat oder dgl. für eine optische Spannungsmessung geeignetem Material aufweist.

26. Vorrichtung nach Anspruch 24 oder 25, dadurch gekennzeichnet, daß das Gehäuse (50) der Umlenkeinrichtung (10) in seiner Gestalt und seinen Abmessungen im wesentlichen den anatomischen Raumverhältnissen des Mundinnenraums angepaßt ist.

27. Vorrichtung nach einem der Ansprüche 24 bis 26, dadurch gekennzeichnet, daß das Gehäuse (50) der Umlenkeinrichtung (10) flach zum Einsetzen zwischen Ober- und Unterkiefergebiß ausgebildet ist.

28. Vorrichtung nach einem der Ansprüche 9 und 16 bis 27, dadurch gekennzeichnet, daß die Umlenkeinrichtung (10), die Antriebseinheit (82) für die Umlenkeinrichtung (10) und die Aufnahmeoptik (90) in einem gemeinsamen Vorrichtungsgehäuse angeordnet sind.

29. Vorrichtung nach einem der Ansprüche 9 und 16 bis 28, dadurch gekennzeichnet, daß die Beleuchtungsoptik (8) die Umlenkeinrichtung (10) und die Aufnahmeoptik (90) als verfahrbare Einheit ausgebildet sind.

30. Vorrichtung nach einem der Ansprüche 9 bis 29, gekennzeichnet durch eine vorzugsweise durch die Position des Spiegelträgers (42) angesteuerte Triggereinrichtung.

31. Vorrichtung nach einem der Ansprüche 9 bis 30, gekennzeichnet durch eine Digitalisiereinrichtung (100) für die optischen Signale der reflektierten Strahlung.

32. Vorrichtung nach Anspruch 31, dadurch gekennzeichnet, daß die Digitalisiereinrichtung (100) eine Videokamera (CCD-Kamera) (104) od. dgl. Aufnahmesystem enthält.

33. Vorrichtung nach Anspruch 31 oder 32, dadurch gekennzeichnet, daß die Digitalisiereinrichtung (100) einen Flächensensor (106) und eine Faltungsoptik (102) zur Umwandlung der umgelenkten reflektierten Strahlung von einem Zeilenmuster in ein Flächenmuster aufweist.

34. Vorrichtung nach einem der Ansprüche 31 bis 33, dadurch gekennzeichnet, daß die Digitalisiereinrichtung (100) einen Fühler zur Erfassung der Position Antriebseinheit (82) bzw. des Spiegelträgers (42) aufweist.

35. Vorrichtung nach einem der Ansprüche 31 bis 34, dadurch gekennzeichnet, daß die Digitalisiereinrichtung (100) einen Fühler zur Erfassung der Wellenlänge des von der Projektionseinrichtung ausgestrahlten sowie des empfangenen, durch das Objekt transformierten und reflektierten Lichts, insbesondere Laserstrahls, aufweist.

36. Vorrichtung nach einem der Ansprüche 31 bis 35, dadurch gekennzeichnet, daß die Digitalisiereinrichtung (100) einen Fühler zur Erfassung des Streifenabstandes und Triangulationswinkels des von dem Interferometer (6) erzeugten Streifenmusters aufweist.

37. Vorrichtung nach einem der Ansprüche 9 bis 36, dadurch gekennzeichnet, daß die Projektionseinrichtung derart ausgebildet ist, daß sie durch Erhöhung der Strahlungsenergie zur Bearbeitung des Mundinnenraumes einsetzbar ist.

38. Vorrichtung nach einem der Anspruch 9 bis 37, dadurch gekennzeichnet, daß der intraorale Vorrichtungsabschnitt als Kräftemeßeinrichtung ausgebildet ist.

39. Vorrichtung nach Anspruch 38, dadurch gekennzeichnet, daß die Kräftemeßeinrichtung einen pyroelektrischen Detektor aufweist.

40. Vorrichtung nach Anspruch 39, dadurch gekennzeichnet, daß der pyroelektrische Detektor zweiachsig gereckte Schichten aus pyroelektrischem Material aufweist.

41. Vorrichtung nach Anspruch 38, dadurch gekennzeichnet, daß die Kräftemeßeinrichtung als eine optische Isochromatenauswerteeinrichtung ausgebildet ist.

## Claims

1. A process for measuring the dimensions of a space in particular of a buccal cavity with upper and lower dentition, using a scanning device which is inserted at least in part into the space that is to be measured, preferably a buccal cavity, wherein an optical measurement device is used as the scanning device, the optical signals of which are converted into electronic signals that can be evaluated by a computer, wherein the measurement device includes a projection device by means of which optical radiation is projected from a source of radiation (4) by means of a deflection device (10, 18, 20, 22) onto the surfaces and/or the translucent internal volume of the buccal cavity to be measured, in particular of the translucent teeth, and wherein the radiation that is reflected from the surfaces and/or the translucent internal volume is transmitted to the recording device by means of the deflection device (10, 18, 20, 22), **characterized in** that the optical radiation is simultaneously projected onto the surfaces of the upper and lower dentition and/or the translucent internal volume of the upper and lower dentition, in particular of the translucent teeth, by means of the deflection device (10, 18, 20, 229), and in that the radiation reflected from the surfaces and/or the translucent internal volume is simultaneously transmitted to the recording device by means of the deflection device (10, 18, 20, 22).

2. A process according to claim 1, **characterized in** that the optical radiation is projected onto the surfaces and/or the translucent internal volume of the buccal cavity that is to be measured, in particular of the translucent teeth, in the form, for example, of a strip pattern that is generated by means of interference.

3. A process according to claim 1 or 2, **characterized in** that the reflected radiation is recorded by a recording device that operates on the principle of stereogrammetry, according to the triangulation principle, or according to the principle of a hologram.

4. A process according to claim 3, **characterized in** that the projected radiation and/or the reflected radiation is projected onto the surfaces and/or onto the translucent internal volume of the buccal cavity that is to be measured, in particular the translucent teeth, and/or recorded from the surfaces and/or from the translucent internal volume of the buccal cavity line by line, i.e., as if by scanning, as a result of relative movement of the projection device and/or of the recording device or of a part thereof, respectively, e.g., of a deflection device (10, 18, 20, 22) relative to the buccal cavity.

5. A process according to claim 3 or 4, **characterized in** that the optical signals of the reflected radiation are reproduced on a plane sensor (e.g., a CCD sensor chip), optionally by means of folding optics.

6. A process according to one of the claims 1 to 5, **characterized in** that the electronic signals are processed to form images and that these are displayed on a monitor.

7. A process according to claim 6, **characterized in** that the electronic signals that are processed preferably by means of CAD modelling are passed to a CAM manufacturing system to produce replacement parts for teeth.

8. A process according to one of the claims 1 to 7, **characterized in** that the projection device can be used for working directly on the surfaces of the buccal cavity, in particular of the teeth, by increasing the amount of energy that is supplied to it.

9. A scanning device for carrying out the process as defined in one of the claims 1 to 8, comprising a source of optical radiation (4) that is preferably arranged in an extra-oral section of the device and a projection device that incorporates an optical illuminating system (8), which projects optical radiation by means of a deflection device (10, 18, 20, 22) onto the surfaces and/or the translucent internal volume of the buccal cavity, in particular of the translucent volume of the teeth, a recording device transmitting the radiation that is reflected from the surfaces and/or the translucent internal volume by means of a deflection device (10, 18, 20, 22) to the optical recording system (90), and an evaluation device (108), that is preferably arranged in an extra-oral section of the device, which evaluates the reflected radiation that has been recorded**, characterized in** that the optical radiation is simultaneously projectable onto the surfaces of the upper and lower dentition and/or the translucent internal volume of the upper and lower dentition, in particular onto the translucent teeth by means of the deflection device (10, 18, 20, 22).

10. A device according to claim 9, **characterized in** that the projection device projects a defined optical radiation pattern onto the surfaces of the buccal cavity.

11. A device according to claim 10, **characterized in** that the pattern that is generated by the projection device is a strip pattern.

12. A device according to one of the claims 9 to 11, **characterized in** that the projection device comprises an interferometer (6), for example, a Michelson interferometer.

13. A device according to one of the claims 9 to 12, **characterized in** that the projection device comprises a light source (4) which preferably radiates light that is similar to sunlight (so-called white light), or UV light, or tungsten light.

14. A device according to one of the claims 9 to 13, **characterized in** that the projection device comprises a source of optical radiation that is configured as a light source (4), a laser that is preferably of variable frequency, or a monochromator that preferably radiates polarized light.

15. A device according to one of the claims 9 to 14, **characterized in** that the projection device comprises an optical illuminating system (8) comprising a lens or a system of lenses to provide even illumination of the buccal cavity.

16. A device according to claim 9, **characterized in** that the deflection device (10) comprises a mirror or a system of mirrors (18).

17. A device acording to claim 9 or claim 16, **characterized in** that the deflection device (20) comprises a double or multiple mirror (18) and/or facet-like deflection elements and/or holographic deflection elements.

18. A device according to claim 16 or claim 17, **characterized in** that the mirror or the mirror system (18) is configured so as to be aspherical.

19. A device according to one of the claims 16 to 18, **characterized in** that the deflection device (10) comprises a glass body (22) that, preferably on its edge (20) that is remote from the light source (4), is mirrored and/or partially mirrored and/or semi-transparently mirrored and/or has facet-like deflection elements and/or holographic deflection elements.

20. A device according to one of the claims 16 to 19, **characterized in** that the mirror or the mirror system (18) and/or the glass body (22) is arranged on a mirror carrier (42) that is preferably provided with supporting rails (24, 26).

21. A device according to claim 20, **characterized in** that the mirror carrier (42) can be moved relative to the buccal cavity, preferably in a linear guide system that is arranged extra-orally.

22. A device according to claim 20 or 21**, characterized in** that the mirror carrier (42) can be moved in the direction of the longitudinal axis (L) of the projection device, in particular of the optical illuminating system (8) or the recording device, respectively, particularly of the optical recording system (90), either continuously or incrementally.

23. A device according to one of the claims 20 to 22, **characterized in** that the recording device can be adjusted relative to the mirror carrier (42) perpendicularly to the horizontal middle plane (M) of the mirror (18) or the glass body (22), respectively, and/or horizontally in the horizontal middle plane (M) of the mirror (18) or of the glass body (22), respectively, and perpendicularly to the longitudinal axis (L) of the projection device.

24. A device according to one of the claims 9 and 16 to 23, **characterized in** that the deflection device (10) is arranged within a housing (50) that is mirrored so as to be at least partially transparent or semi-transparent.

25. A device according to claim 24, **characterized in** that, at least in its area that is in contact with the teeth, the housing (50) of the deflection device (10) comprises an inserted layer of polycarbonate or similar material that is suitable for the optical measurement of stresses.

26. A device according to claim 24 or claim 25, **characterized in** that the shape and dimensions of the housing (50) of the deflection device (10) are essentially matched to the anatomical volumetric proportions of the buccal cavity.

27. A device according to one of the claims 24 to 26, **characterized in** that the housing (50) of the deflection device (10) is configured so as to be flat for insertion between the upper and the lower dentition.

28. A device according to one of the claims 9 and 16 to 27, **characterized in** that the deflection device (10), the drive unit (82) for the deflection device (10), and the optical recording system (90) are arranged in one common housing.

29. A device according to one of the claims 9 and 16 to 28, **characterized in** that the optical illuminating system (8), the deflection device (10), and the optical recording system (90) are configured as a moveable unit.

30. A device according to one of the claims 9 to 29, **characterized** by a triggering device that is preferably controlled by the position of the mirror carrier (42).

31. A device according to one of the claims 9 to 30, **characterized** by a digitizing device (100) for the optical signals of the reflected radiation.

32. A device according to claim 31, **characterized in** that the digitizing device (100) comprises a video camera (CCD camera) (104) or a similar recording system.

33. A device according to claim 31 or claim 32, **characterized in** that the digitizing device (100) comprises a plane sensor (106) and a system of folding optics (102) to convert the deflected reflected radiation from a line pattern to an area pattern.

34. A device according to one of the claims 31 to 33, **characterized in** that the digitizing device (100) comprises a sensor to determine the position of the drive unit (82) or of the mirror carrier (42), respectively.

35. A device according to one of the claims 31 to 34, **characterized in** that the digitizing device (100) comprises a sensor to measure the wavelength of the light, in particular of the laser beam, that is radiated by the projection device, as well as of the light that is transformed and reflected by the object, and then received.

36. A device according to one of the claims 31 to 35, **characterized in** that the digitizing device (100) comprises a sensor to detect the distance between the strips and the triangulation angle of the strip pattern that is generated by the interferometer (6).

37. A device according to one of the claims 9 to 36, **characterized in** that the projection device is so configured that by increasing the amount of radiation energy it can be used to work on the buccal cavity.

38. A device according to one of the claims 9 to 37, **characterized in** that the intra-oral section of the device is configured as a force-measurement device.

39. A device according to claim 38, **characterized in** that at the force-measurement device comprises a pyro-electric detector.

40. A device according to claim 39**, characterized in** that the pyro-electric detector comprises layers of pyro-electric material that are biaxially oriented.

41. A device according to claim 38, **characterized in** that the force-measurement device is configured as an optical isochromatic evaluation device.

## Revendications

1. Procédé pour déterminer les dimensions d'un espace, en particulier d'une cavité buccale avec une dentition de mâchoire supérieure et une dentition de mâchoire inférieure, à l'aide d'un dispositif d'exploration (2) que l'on introduit au moins partiellement dans l'espace à mesurer, de préférence dans la cavité buccale, dans lequel on utilise comme dispositif d'exploration, de préférence un dispositif de mesure optique (figure 2) dont les signaux optiques sont transformés en signaux électroniques exploitables dans une installation de traitement de données, dans lequel le dispositif de mesure comprend un dispositif de projection au moyen duquel le rayonnement optique d'une source (4) de rayonnement est projeté par l'intermédiaire d'un dispositif de déviation (10, 18, 20, 22) sur la surface et/ou sur l'intérieur translucide de la cavité buccale à mesurer, en particulier des dents translucides et dans lequel le rayonnement réfléchi par les surfaces et/ou l'intérieur translucide est renvoyé par l'intermédiaire du dispositif de déviation (10, 18, 20, 22) sur un dispositif récepteur, caractérisé par la fait que le rayonnement optique est projeté par l'intermédiaire du dispositif de déviation (10, 18, 20, 22) simultanément sur les surfaces de la mâchoire supérieure et de la mâchoire inférieure et/ou sur l'intérieur translucide de la mâchoire supérieure et de la mâchoire inférieure, en particulier des dents translucides, et par le fait que le rayonnement réfléchi par les surfaces et/ou l'intérieur translucide est renvoyé simultanément sur le dispositif récepteur par l'intermédiaire du dispositif de déviation (10, 18, 20, 22).

2. Procédé selon la revendication 1, caractérisé par le fait que l'on projette le rayonnement optique sur les surfaces et/ou l'intérieur du volume translucide de la cavité buccale à mesurer, notamment des dents translucides, sous la forme d'un modèle en bandes qui est produit par exemple par interférence.

3. Procédé selon la revendication 1 ou la revendication 2, caractérisé par le fait que l'on enregistre le rayonnement réfléchi à l'aide d'un dispositif récepteur stéréographique ou d'un dispositif d'enregistrement travaillant selon le principe de la triangulation ou selon le principe d'un hologramme.

4. Procédé selon la revendication 3, caractérisé par le fait que par un déplacement relatif du dispositif de projection et/ou du dispositif récepteur ou d'une partie de celui-ci, par exemple d'un dispositif de déviation (10, 18, 20, 22), par rapport à la cavité buccale, le rayonnement projeté et/ou le rayonnement réfléchi est projeté ligne à ligne sur les surfaces et/ou l'intérieur translucide de la cavité buccale à mesurer, en particulier sur les dents translucides, et/ou réfléchi ligne à ligne par les surfaces et/ou l'intérieur translucide de la cavité buccale, c'est-à-dire est projeté ou réfléchi à la manière d'un balayage.

5. Procédé selon la revendication 3 ou la revendication 4, caractérisé par le fait que les signaux optiques du rayonnement réfléchi sont reproduits, éventuellement à l'aide d'un moyen optique de déviation, sur un détecteur plan (par exemple une puce de détecteurs a CCD).

6. Procédé selon les revendications 1 à 5, caractérisé par le fait que les signaux électroniques sont traités pour former des images qui peuvent être visualisées sur un écran.

7. Procédé selon la revendication 6, caractérisé par le fait que les signaux électroniques traités de préférence par modélisation CAO sont transmis à un système de production FAO pour fabriquer des prothèses dentaires.

8. Procédé selon l'une des revendications 1 à 7, caractérisé par le fait que l'on utilise le dispositif de projection pour traiter directement des surfaces à l'intérieur de la cavité buccale, en particulier les dents, en augmentant l'énergie envoyée audit dispositif.

9. Dispositif d'exploration pour la mise en oeuvre du procédé selon l'une des revendications 1 à 8, comportant une source de rayonnement (4) optique qui de préférence est disposée dans une partie extra-orale de l'appareil, un dispositif de projection comprenant une optique d'éclairage (8) qui, par l'intermédiaire d'un dispositif de déviation (10, 18, 20, 22), projette le rayonnement optique sur les surfaces et/ou l'intérieur translucide de la cavité buccale, notamment du volume translucide des dents, un dispositif récepteur qui, par l'intermédiaire d'un dispositif de déviation (10, 18, 20, 22), envoie sur une optique de réception (90) le rayonnement réfléchi par les surfaces et/ou l'intérieur translucide de la cavité buccale ainsi qu'un dispositif de traitement (108) qui, de préférence, est disposé dans une partie extra-orale du dispositif et exploite le rayonnement réfléchi reçu, caractérisé par le fait que le rayonnement optique est projeté par l'intermédiaire d'un dispositif de déviation (10, 18, 20, 22) simultanément sur les surfaces des mâchoires supérieure et inférieure et/ou sur l'intérieur translucide des mâchoires supérieure et inférieure, notamment sur les dents translucides.

10. Dispositif selon la revendication 9, caractérisé par le fait que le dispositif de projection projette un modèle déterminé de rayons optiques sur les surfaces de la cavité buccale.

11. Dispositif selon la revendication 10, caractérisé par le fait que le modèle optique produit par le dispositif de projection est un modèle en bandes.

12. Dispositif selon l'une des revendications 9 à 11, caractérisé par le fait que le dispositif de projection comporte un interféromètre (6) par exemple un interféromètre de Michelson.

13. Dispositif selon l'une des revendications 9 à 12, caractérisé par le fait que le dispositif de projection comporte une source de lumière (4) qui, de préférence, émet une lumière proche de la lumière du soleil (dite lumière blanche) ou de la lumière UV ou de la lumière émise par une lampe à filament de tungstène.

14. Dispositif selon l'une des revendications 9 à 13, caractérisé par le fait que le dispositif de projection comporte comme source de lumière (4) produisant un rayonnement optique un laser, de préférence réglable, ou un monochromateur qui, de préférence, émet de la lumière polarisée.

15. Dispositif selon l'une des revendications 9 à 14, caractérisé par le fait que le dispositif de projection comporte une optique d'éclairage (8) pourvue d'une lentille ou d'un système de lentilles aux fins d'éclairer de manière uniforme la cavité buccale.

16. Dispositif selon la revendication 9, caractérisé par le fait que le dispositif de déviation (10) comporte un miroir ou un système de miroirs (18).

17. Dispositif selon la revendication 9 ou la revendication 16, caractérisé par le fait que le dispositif de déviation (10) comporte un miroir double ou un miroir multiple (18) et/ou des éléments de déviation de type à facettes et/ou des éléments de déviation holographiques.

18. Dispositif selon la revendication 16 ou la revendication 17, caractérisé par le fait que le miroir ou le système de miroirs (18) est asphérique.

19. Dispositif selon l'une des revendications 16 à 18, caractérisé par le fait que le dispositif de déviation (10) comporte un élément en verte (22) dont le bord (20) éloigné de la source de lumière (4) présente de préférence un revêtement réfléchissant et/ou un revêtement réfléchissant partiel et/ou un revêtement semi-réfléchissant et/ou des éléments de déviation de type à facettes et/ou des éléments de déviation holographiques.

20. Dispositif selon l'une des revendications 16 à 19, caractérisé par le fait que le miroir ou le système de miroirs (18) et/ou l'élément en verte (22) est/sont disposés sur un support (42), de préférence pourvu de rails support (24, 26).

21. Dispositif selon la revendication 20, caractérisé par le fait que le support (42) de miroir peut se déplacer par rapport à la cavité buccale, de préférence sur un moyen de guidage linéaire extraoral.

22. Dispositif selon la revendication 20 ou 21, caractérisé par le fait que le support (42) de miroir peut être déplacé de manière continue ou pas à pas dans la direction de l'axe longitudinal (L) du dispositif de projection, en particulier de l'optique d'éclairage (8) ou du dispositif récepteur, en particulier de l'optique de réception (90).

23. Dispositif selon l'une des revendications 20 à 22, caractérisé par le fait que le dispositif récepteur peut être déplacé par rapport au support de miroir (42) verticalement par rapport au plan médian (M) horizontal du miroir (18) ou de l'élément en verte (22) et/ou horizontalement dans le plan médian (M) horizontal du miroir (18) ou de l'élément en verte (22) et perpendiculairement à l'axe longitudinal (L) de dispositif de projection.

24. Dispositif selon l'une des revendications 9 et 16 à 22, caractérisé par le fait que le dispositif de déviation (10) est disposé dans un boîtier (50) au moins partiellement translucide ou pourvu d'un revêtement semi-réfléchissant.

25. Dispositif selon la revendication 24, caractérisé par le fait que, au moins dans sa région venant en contact avec les dents, le boîtier (50) du dispositif de déviation (10) présente un pli en polycarbonate ou en un matériau adapté pour une mesure optique des contraintes.

26. Dispositif selon la revendication 24 ou la revendication 25, caractérisé par le fait que le boîtier (50) du dispositif de déviation (10) a une forme et des dimensions qui sont sensiblement adaptées sur le plan anatomique à l'espace de la cavité buccale.

27. Dispositif selon l'une des revendications 24 à 26, caractérisé par le fait que le boîtier (50) du dispositif de déviation (10) est plat de manière à pouvoir être placé entre la dentition de la mâchoire supérieure et la dentition de la mâchoire inférieure.

28. Dispositif selon l'une des revendications 9 et 16 à 27, caractérisé par le fait que le dispositif de déviation (10), le dispositif d'entraînement (82) du dispositif de déviation (10) et l'optique de réception (90) sont disposés dans un boîtier commun.

29. Dispositif selon l'une des revendications 9 et 16 à 28, caractérisé par le fait que l'optique d'éclairage (8), le dispositif de déviation (10) et l'optique de réception (90) sont agencés sous forme d'ensemble mobile.

30. Dispositif selon l'une des revendications 9 à 29, caractérisé par un dispositif de déclenchement qui est commandé de préférence par la position du support de miroir (42).

31. Dispositif selon l'une des revendications 9 à 30, caractérisé par un dispositif de numérisation (100) pour les signaux optiques du rayonnement réfléchi.

32. Dispositif selon revendication 31, caractérisé par le fait que le dispositif de numérisation (100) comprend une caméra vidéo (caméra à CCD) (104) ou un système d'enregistrement similaire.

33. Dispositif selon la revendication 31 ou la revendication 32, caractérisé par le fait que le dispositif de numérisation (100) présente un dispositif optique de déviation (102) pour transformer le rayonnement réfléchi dévié d'un modèle linéaire en un modèle plan.

34. Dispositif selon l'une des revendications 31 à 33, caractérisé par le fait que le dispositif de numérisation (100) présente un capteur pour déterminer la position de l'unité d'entraînement (82) ou du support de miroir (42).

35. Dispositif selon l'une des revendications 31 à 34, caractérisé par le fait que le dispositif de numérisation (100) présente un capteur pour déterminer la longueur d'onde de la lumière émise par le dispositif de projection ainsi que de la lumière reçue, transformée par l'objet et réfléchie, notamment du rayon laser.

36. Dispositif selon l'une des revendications 31 à 35, caractérisé par le fait que le dispositif de numérisation (100) présente un capteur pour déterminer l'intervalles entre bandes et l'angle de triangulation du modèle à bandes produit par l'interféromètre (6).

37. Dispositif selon l'une des revendications 9 à 36, caractérisé par le fait que le dispositif de projection est agencé de manière telle qu'il peut être utilisé pour traiter l'intérieur de la cavité buccale en augmentant l'énergie du rayonnement.

38. Dispositif selon l'une des revendications 9 à 37, caractérisé par le fait que la partie intra-orale du dispositif-est agencée sous forme de dispositif de mesure de forces.

39. Dispositif selon la revendication 38, caractérisé par le fait que le dispositif de mesure de forces comporte un détecteur pyro-électrique.

40. Dispositif selon la revendication 39, caractérisé par le fait que le détecteur pyro-électrique présente des couches étirées bi-axiales de matériau pyro-électrique.

41. Dispositif selon la revendication 38, caractérisé par le fait que le dispositif de mesure des forces est agencé sous la forme d'un dispositif optique de traitement d'isochromes.
